(19) Europäisches Patentamt
European Patent Office
Office européen des brevets

(11) **EP 4 550 211 A1**

(12) **EUROPEAN PATENT APPLICATION**

(43) Date of publication:
**07.05.2025   Bulletin 2025/19**

(21) Application number: **23206829.6**

(22) Date of filing: **30.10.2023**

(51) International Patent Classification (IPC):
**G06N 3/045** (2023.01)    **G06N 3/096** (2023.01)

(52) Cooperative Patent Classification (CPC):
**G06N 3/045; G06N 3/096**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **DeepMind Technologies Limited
London EC4A 3TW (GB)**

(72) Inventors:
• **HEWITT, John
Menlo Park, CA 94025 (US)**
• **KUNCORO, Adhiguna Surya
London, NC1 4AG (GB)**
• **CHEKOUDAR, Aida Nematzadeh
London, NC1 4AG (GB)**

(74) Representative: **Marks & Clerk GST
1 New York Street
Manchester M1 4HD (GB)**

(54) **DETERMINING TRAINING DATA SIZES FOR TRAINING SMALLER NEURAL NETWORKS USING SHRINKING ESTIMATES**

(57)   Methods, systems, and apparatus, including computer programs encoded on a computer storage medium, for determining a size of a training data set for training a machine learning model. In one aspect, the size is determined using a shrinking estimate that estimates how much training data is needed to train a smaller machine learning model to achieve the same performance as a larger machine learning model.

**200**

```
┌─────────────────────────────────────────────────────┐
│ OBTAIN DATA SPECIFYING FIRST SIZE OF TRAINED MACHINE │  202
│ LEARNING MODEL THAT HAS BEEN TRAINED ON A FIRST      │
│ AMOUNT OF TRAINING DATA                              │
└─────────────────────────────────────────────────────┘
                         │
                         ▼
┌─────────────────────────────────────────────────────┐
│ RECEIVE DATA SPECIFYING SECOND SIZE OF SECOND        │  204
│ MACHINE LEARNING MODEL                               │
└─────────────────────────────────────────────────────┘
                         │
                         ▼
┌─────────────────────────────────────────────────────┐
│ PROCESS DATA SPECIFYING THE FIRST SIZE, THE SECOND   │  206
│ SIZE, AND THE FIRST AMOUNT OF TRAINING DATA USING    │
│ MODEL SHRINKING MAPPING                              │
└─────────────────────────────────────────────────────┘
                         │
                         ▼
┌─────────────────────────────────────────────────────┐
│ GENERATE TRAINING DATA SET THAT INCLUDES THE SECOND  │  208
│ AMOUNT OF TRAINING DATA                              │
└─────────────────────────────────────────────────────┘
                         │
                         ▼
┌─────────────────────────────────────────────────────┐
│ TRAIN SECOND MACHINE LEARNING MODEL ON THE TRAINING  │  210
│ DATA                                                 │
└─────────────────────────────────────────────────────┘
```

**FIG. 2**

EP 4 550 211 A1

**Description**

BACKGROUND

This specification relates to processing data using machine learning models.

Machine learning models receive an input and generate an output, e.g., a predicted output, based on the received input. Some machine learning models are parametric models and generate the output based on the received input and on values of the parameters of the model.

Some machine learning models are deep models that employ multiple layers of models to generate an output for a received input. For example, a deep neural network is a deep machine learning model that includes an output layer and one or more hidden layers that each apply a nonlinear transformation to a received input to generate an output.

SUMMARY

This specification generally describes a training system implemented as computer programs on one or more computers in one or more locations that can train a machine learning model to perform a machine learning task. As is described below, the training system can perform various methods and be realized in various systems to train the machine learning model.

Generally, the system can train a second machine learning model ("smaller" machine learning model) to match the performance of an already-trained first machine learning model ("larger" machine learning model), e.g., a "compute-optimal" large machine learning model, despite the second model being smaller, e.g., having fewer parameters, than the first machine learning model. To do so, the system uses a shrinking mapping to determine the amount of training data that the second machine learning model needs to be trained on in order to match the performance of the first machine learning model. The system can then train the second machine learning model on the determined amount of training data aiming to cause the second model to achieve substantially the same performance as the first machine learning model. Thus, once deployed and as a result of being trained on this training data set, the second model will achieve substantially the same performance as the first machine learning model despite having lower computational cost, less latency, and a small environmental impact at inference time.

In one aspect, a method performed by one or more computers for training a machine learning model is described. The method includes: obtaining data specifying a first size of a trained first machine learning model that has been trained on a first training data set that comprises a first amount of training data to achieve a target performance on a machine learning task; receiving data specifying a second size of a second machine learning model to be trained to perform the machine learning task, wherein the second size is smaller than the first size; and processing the data specifying the first size of the trained first machine learning model, the second size of the second machine learning model, and the first amount of training data using a model shrinking mapping, in accordance with a set of one or more model shrinking mapping parameters, to determine a second amount of training data required to train the second machine learning model to achieve the target performance on the machine learning task, comprising: determining a ratio of the first size to the second size; applying the model shrinking mapping, in accordance with the set of one or more model shrinking mapping parameters, to the ratio to determine the second amount of training data.

In a second aspect, a system is described. The system includes one or more non-transitory computer storage media storing instructions that when executed by one or more computers cause the one or more computers to perform operations of any of the abovementioned methods.

In a third aspect, a system is described. The system includes one or more computers and one or more storage devices communicatively coupled to the one or more computers, where the one or more storage devices store instructions that, when executed by the one or more computers, cause the one or more computers to perform operations of any of the abovementioned methods.

As mentioned above, a training system can train a machine learning model to perform a machine learning task, e.g., by implementing any of the above-mentioned methods. The machine learning model can be any appropriate type of machine learning model that maps an input to a sequence of tokens from a vocabulary of tokens. For example, the machine learning model can be a language model (LM) neural network model, e.g., one that has an attention-based neural network architecture (e.g., a transformer architecture). In general, the neural network model can include any appropriate types of neural network layers (e.g., convolutional layers, attention layers, fully connected layers, recurrent layers, etc.) in any appropriate numbers (e.g., 10 layers, 100 layers, or 1000 layers) and connected in any appropriate configuration (e.g., as a linear sequence of layers or as a directed graph of layers).

Throughout this specification, the "model size" of a machine learning model can refer to the number of (trainable) parameters required to implement the machine learning model, such as weights, biases, matrix elements, and so forth.

Throughout this specification, a "training compute budget" characterizes an amount of computing resources allocated for training the machine learning model to perform the machine learning task. The training compute budget can be measured in floating point operations, i.e., a total number of operations available to train the machine learning model or to perform inference using the machine learning model. Note, FLOPs denoted with a lower case "s" is not to be confused with floating point operations per second (FLOPS) which is denoted with an upper case "S" and corresponds to a rate of operations that can be performed by specific computing hardware. In some cases, the FLOPs can be determined from the FLOPS multiplied by the total computation time as $FLOPs = FLOPS \times time.$

In some implementations, the method is used for adapting the machine learning model to specific computing hardware. In such cases, the machine learning model includes a neural network model and the specific computing hardware includes multiple neural network accelerators. A neural network accelerator is specialized hardware that is used to accelerate neural network computations, such as a GPU (Graphics Processing Unit) or TPU (Tensor Processing Unit). In general, a neural network accelerator is configured to perform hardware matrix multiplications, e.g., using parallel computations (e.g., it can include a set of one or more multiply accumulate units (MACs)). For example, the method can be used when the first machine learning model is too large to be deployed on the specific computing hardware, e.g., because the size of the model causes it to exceed the memory capacity of the specific computing hardware, to generate a trained model that can be deployed on the specific hardware and matches the performance of the too large model.

As described above, the method is used to determine the target amount of training data for training the second machine learning model. The target amount of training data defines a number of training data items, e.g., training tokens to be used for training the model. Each token is selected from a vocabulary of tokens that includes, e.g., textual tokens representing words or wordpieces or characters or other text symbols, visual tokens representing intensity values for pixels of a still or moving image, e.g., for a region of the image, or both. That is, the training data includes multiple training data items, each of which is made up of one or more tokens from the vocabulary. Therefore, the total number of tokens in the training data can be used to define the target amount of training data.

The machine learning model used for the techniques described herein can be configured to perform any appropriate machine learning task that requires mapping an input to a sequence of tokens from the vocabulary. The input can also be made up of tokens from the vocabulary or can include additional inputs, e.g., multi-modal inputs, instead of or in addition to the tokens from the vocabulary.

In other words, the machine learning model can be configured to generate any model output that characterizes the model input. For example, the model output can be a classification output (i.e. data specifying one of a set of predetermined classes and indicative of the model input corresponding to the specified one of the classes), a regression output (i.e. data characterizing a signal component of the model input and having a lower number of independent variables than the model input), a sequence output (i.e., that includes a sequence of output elements which may be tokens from the vocabulary), a segmentation output (i.e. data defining one or more portions of the model input, and indicative of those portion(s) having a property, e.g. corresponding to a real world object), or a combination thereof.

In particular, the machine learning model can be configured to process any appropriate model input, e.g., including one or more of: an image (e.g. captured by a camera), an audio waveform (e.g. captured using a microphone), a point cloud (e.g., generated by a lidar or radar sensor), a representation of a protein, a representation of a molecule, a sequence of words (e.g., that form one or more sentences or paragraphs), a video (e.g., represented a sequence of video frames), or a combination thereof.

A few examples of machine learning tasks that can be performed by the machine learning model are described in more detail next.

In some implementations, the machine learning model is configured to process a model input that represents the pixels of an image to generate a classification output that includes a respective score for each object category in a set of possible object categories (e.g. vehicle, pedestrian, bicyclist, etc.). The score for an object category can define a likelihood that the image depicts an object that belongs to the object category.

In some implementations, the machine learning model is configured to process a model input that represents audio samples in an audio waveform to perform speech recognition, i.e., to generate an output that defines a sequence of phonemes, graphemes, characters, or words corresponding to the audio waveform.

In some implementations, the machine learning model is configured to process a model input that represent words in a sequence of words to perform a natural language processing task, e.g., topic classification or summarization. To perform topic classification, the machine learning model generates an output that includes a respective score for each topic category in a set of possible category categories (e.g., sports, business, science, etc.). The score for a topic category can define a likelihood that the sequence of words pertains to the topic category. To perform summarization, the machine learning model generates an output that includes an output sequence of words that has a shorter length than the input sequence of words and that captures important or relevant information from the input sequence of words.

In some implementations, the machine learning model performs a machine translation task, e.g., by processing a model input that represents a sequence of text such as a sequence of words, phrases, characters, or word pieces, in one (e.g. natural) language, to generate an output that can be a translation of the sequence of text into another (e.g. natural) language, i.e., a sequence of text in the other language that is a translation of the input sequence of text. As a particular example, the task can be a multi-lingual machine translation task, where the machine learning model is configured to translate between multiple different source language - target language pairs. In this example, the source language text can be augmented with an identifier that indicates the target language into which the machine learning model should translate the source language text.

In some implementations, the machine learning model is configured to perform an audio processing task. For example, if the model input represents a spoken utterance, then the output generated by the machine learning model can be a score for each of a set of pieces of text, each score representing an estimated likelihood that the piece of text is the correct transcript for the utterance. As another example, if the model input represents a spoken utterance, the output generated by the machine learning model can indicate whether a particular word or phrase ("hotword") was spoken in the utterance. As another example, if the model input represents a spoken utterance, the output generated by the machine learning model can identify the natural language in which the utterance was spoken.

In some implementations, the machine learning model is configured to perform a natural language processing or understanding task, e.g., an entailment task, a paraphrase task, a textual similarity task, a sentiment task, a sentence completion task, a grammaticality task, and so on, that operates on a set of model inputs representing text in some natural language.

In some implementations, the machine learning model is configured to perform a text to speech task, where the model input represents text in a natural language or features of text in a natural language and the model output is a spectrogram, a waveform, or other data defining audio of the text being spoken in the natural language.

In some implementations, the machine learning model is configured to perform a text generation task, where the model input represents a sequence of text, and the output is another sequence of text, e.g., a completion of the input sequence of text, a response to a question posed in the input sequence, or a sequence of text that is about a topic specified by the first sequence of text. As another example, the model input can represent data other than text, e.g., an image, and the output sequence can be text that describes the data represented by the model inputs.

In some implementations, the machine learning model is configured to perform an image generation task, where the model input represents a conditioning input, e.g., conditioning text, conditioning speech, or a conditioning image, and the output is a sequence of intensity value inputs for the pixels of an image.

In some implementations, the machine learning model is configured to perform an agent control task, where the model input represents a sequence of one or more observations or other data characterizing states of an environment and the output defines an action to be performed by the agent in response to the most recent data in the sequence. The agent may be a mechanical agent acting in a real-world environment to perform a task; the observations may include any type of observations, e.g., image observations; the model output may include control signals to control the agent to perform the task. Optionally, the model input may include other information, e.g., textual tokens for text defining the task to be performed. The agent can be a real-world or simulated robot, a control system for an industrial facility, or a control system that controls a different kind of agent.

In some implementations, the machine learning model is configured to perform a genomics task, where the model input represents a fragment of a DNA sequence or other molecule sequence and the output includes, e.g., a promoter site prediction, a methylation analysis, a prediction for functional effects of non-coding variants, and so on.

In some implementations, the machine learning model is configured to perform a protein modeling task, e.g., where the model input represents a protein and the model output characterizes the protein. For example, the model output can characterize a predicted stability of the protein or a predicted structure of the protein.

In some implementations, the machine learning model is configured to perform a point cloud processing task, e.g., where the model input represents a point cloud (e.g., generated by a lidar or radar sensor) and the model output characterizes, e.g., a type of object represented by the point cloud.

In some implementations, the machine learning model is configured to perform a language modeling task, e.g., by autoregressively generating an output sequence of textual data. More specifically, the machine learning model can be configured to generate a sequence of output textual tokens (where the textual tokens can include, e.g., characters, word pieces, words, n-grams, or other text symbols.). The machine learning model can generate the output sequence of textual tokens over a sequence of time steps. At each time step, the machine learning model can generate the output token at a respective position in the sequence of output textual tokens. The machine learning model can condition the generation of the textual token at a position in the output sequence on textual tokens generated for each of one or more preceding positions in the output sequence. For instance, to generate a textual token at a position in the output sequence of textual tokens, the machine learning model can process data including textual tokens generated for one or more preceding positions in the output sequence of textual tokens to generate a score distribution over a set of possible textual tokens. The machine learning model can then select a token for the position using the score distribution, e.g., by selecting a token having a highest score under the score distribution.

Optionally, a machine learning model configured to perform a language modeling task can be conditioned using one or more conditioning inputs. For example, the machine learning model can be conditioned on a question, and the machine learning model can autoregressively generate an output sequence of textual data that provides an answer to the question. As another example, the machine learning model can be conditioned on a task and a programming language, and the machine learning model can autoregressively generate an output sequence of textual data defining instructions in the programming language to accomplish the task. As another example, the machine learning model can be conditioned on a set of input instructions, e.g., textual instructions, and the machine learning model can autoregressively generate an output sequence of textual data that is responsive to the set of input instructions.

In some cases, a machine learning model configured to perform a language modeling task can be implemented as a neural network model. The neural network model can include attention neural network layers, e.g., self-attention neural network layers, cross-attention neural network layers, or both.

In some implementations, the machine learning model is configured to perform a combination of multiple individual machine learning tasks, e.g., two or more of the machine learning tasks mentioned above. For example, the machine learning model can be configured to perform multiple individual natural language understanding tasks, with the model inputs processed by the machine learning model including an identifier for the individual natural language understanding task to be performed on model input.

As a particular example, the machine learning model can include a multimodal model in which one or both of the model input and the model output include an image or audio. For instance, the multimodal machine learning model may be configured to process a model input including visual tokens representing pixels of a still or moving image (e.g., a point cloud image) and/or data representing an audio waveform (e.g., values or features of the audio waveform such as audio tokens and/or text tokens representing a sequence of text) to generate a model output (e.g., text tokens representing the still or moving image or audio waveform and/or a sequence of intensity value inputs for pixels of an image or a sequence of values defining an audio waveform). A visual token may represent multiple pixels in a region of the image, e.g., as features of the region. Such a multimodal model may perform any of the previously described tasks using a multimodal input, or by providing a multimodal output, or by converting between different input and output modes (e.g., text/image/audio). For example, the multimodal model may generate text representing, describing (e.g., captioning), or otherwise characterizing an image or audio input, e.g., by answering a question related to the image or audio input such as a physical prediction of a state of objects represented by the image or audio. As another example, the multimodal model may generate an image or audio represented, described, or otherwise characterized by a text input, or otherwise in response to the text input, e.g., representing an image or audio answer to a text question.

Throughout this specification, the term "optimize" can refer to predicted optimization or approximate optimization, i.e., rather than exact optimization.

Throughout this specification, a "performance measure" or a "performance" of a machine learning model on a machine learning task can refer to a measure of how effectively the machine learning model performs the machine learning task. For instance, the system described in this specification can measure the performance of a machine learning model using a loss or objective function, e.g., that characterizes a prediction accuracy of the machine learning model. That is, the performance measure may be represented as a value of a loss or objective function used to train the machine learning model that is determined after the model is trained. The system can measure the performance of a machine learning model, e.g., on a set of training data used for training the machine learning model, or on a set of validation data that is held out from the training of the machine learning model, i.e., such that the machine learning model is not trained on the set of validation data. Examples of loss/objective functions can include, e.g., cross-entropy objective functions, squared-error objective functions, etc.

The subject matter described in this specification can be implemented in particular embodiments so as to realize one or more of the following advantages.

Some systems apply scaling estimates to determine how to make "optimal" use of a training compute budget to train a large machine learning model, e.g., a model that has a very large number of parameters, e.g., a large language model neural network (LLM). For example, the training compute budget can be the budget to "pre-train" the large model on a large quantity of data. The pre-trained model can then be deployed to perform a downstream task, e.g., after further fine-tuning or in a zero-shot manner.

While applying these scaling estimates can result in a high-performing large machine learning model, these large models, e.g., LLMs, come with corresponding large computational cost, latency, and environmental impact. That is, deploying these large models after training requires significant computational cost, the deployed models have significant latency when making predictions, and making predictions using these large models can have significant environmental impact, e.g., in terms of carbon footprint or energy consumption or both.

Many of these issues can be mitigated by deploying a smaller machine learning model instead of the large model. That is, the smaller model, by virtue of having a smaller size, can consume fewer computational resources and incur less latency when making predictions after deployment and can have a smaller environmental impact.

However, it can be difficult to determine how to train a smaller model to have the same performance as the larger model.

This specification describes techniques for determining the amount of training data that, if used to train a smaller model, will result in a smaller model that has the same performance as a trained larger language model, e.g., a compute-optimal larger language model that has been trained by making "optimal" use of a training compute budget according to the scaling estimates.

That is, this specification describes techniques for generating a "shrinking estimate" that estimates the amount of training data that will be required to train the smaller model to have the same performance as the trained larger model, e.g., the trained compute-optimal larger model.

By making use of these shrinking estimates to determine the amount of training data required and then training the smaller model using the determined amount of data, the smaller model can be deployed instead of or in place of the larger model, resulting in a model that has the same performance but a lower computational cost, lower latency, and lower environmental impact than the larger model.

In some implementations, the shrinking estimate can be size-invariant, i.e., can predict a factor by which the amount of training data needs to be increased based only on the ratio between the sizes of the larger and smaller model and not on the absolute size of either of the models or on the size of training data set used to train the larger machine learning model. In other words, if one wants to approximate an optimal $nk$ parameter model with a smaller $n$-parameter model, one must train the small model on a factor $f(k)$ more data than the large model, independent of $n$, the absolute size of the small model and of the size of the training data set used for the large model.

While it may be possible to determine such an estimate using existing scaling laws, e.g., using Chinchilla scaling estimates, these estimates can be very inaccurate in the regime where a large model is being "shrunk." For example, the Chinchilla estimates can significantly underestimate the required training tokens as $k$ grows. The described size-invariant shrinking estimate, on the other hand, accurately models how the benefit of added training decays as one moves from the compute-optimal line, leading to more accurate estimates when a larger amount training data is being used to train a smaller model.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 shows an example training system.

FIG. 2 is a flow diagram of an example process for training a machine learning model to perform a machine learning task.

FIG. 3A is a flow diagram of an example process for determining a target amount of training data required to train the second machine learning model to perform the machine learning task.

FIG. 3B is a flow diagram of another example process for determining a target amount of training data required to train the second machine learning model to perform the machine learning task.

FIG. 3C shows an example graph that shows differences between data increase factors generated using different estimates.

FIG. 4 shows an example graph that shows an equal loss curve for a particular compute-optimal larger model.

Like reference numbers and designations in the various drawings indicate like elements.

DETAILED DESCRIPTION

Large machine learning models such as large language models (e.g., machine learning models including neural networks that perform language modeling tasks as described above), deep learning models, generative models, discriminative and classification models, regression models, and others, have been implemented with large numbers of parameters, e.g., more than 10 billion parameters, or more than 50 billion parameters, or more than 100 billion parameters, or more than 250 billion parameters, or more than 500 billion parameters. Large language models (LLMs) in particular have demonstrated impressive performance on many machine learning tasks (e.g., language modeling tasks) using a variety of training and evaluation protocols including zero-shot, few-shot, and fine-tuning.

However, the computational and energy costs for deploying large machine learning models (e.g., LLMs) after training, i.e., to perform inference, are substantial and can rise with increasing model size. In particular, performing inference using a trained large model can incur significant latency while also expending significant energy and computational resources.

To mitigate these issues, this specification describes techniques for training a smaller machine learning model to perform as well as the larger machine learning model, but with lower computational and energy cost when deployed for performing inference. The smaller machine learning model may be deployed on a server, e.g., a server which is accessible by one or more user device(s) to perform a computing task on behalf of the user device(s). In this case, using the smaller machine learning model to perform the task may save computer resources as compared to using the larger machine learning model to perform the task. In another example, the smaller machine learning model may be deployed, after it is trained, on an item of user equipment for which it is undesirable or even impossible to deploy the larger machine learning model, such as a portable item of user equipment with limited memory and/or FLOPS, e.g. a mobile telephone (e.g. a smart phone), a personal digital assistant (PDA), a mobile audio or video player, a game console, or a Global Positioning System (GPS) receiver.

The smaller machine learning model and the larger machine learning model are generally both the same type of machine learning model, e.g., are both neural networks, but the smaller language model has a smaller size than the larger machine learning model, e.g., as a result of having fewer parameters. For example, the smaller machine learning model and the larger machine learning model can both be language model neural networks, but with the smaller machine learning model having fewer self-attention layers, having a smaller model dimension (e.g., a smaller number of outputs in one or more of the layers), or both.

For reference, some language model neural networks, e.g., LLMs, include a transformer neural network, i.e., a neural network model with a transformer architecture. In general, a transformer neural network may be a neural network model characterized by having a succession of self-attention neural network layers. A self-attention neural network layer has an attention layer input for each element of the input and is configured to apply an attention mechanism over the attention layer input to generate an attention layer output for each element of the input. There are many different attention mechanisms that may be used. Some of these LLMs may use a transformer neural network as an encoder, some may use a transformer neural network as a decoder, while some may use one transformer neural network as an encoder and another as a decoder, coupled to the encoder. Merely as an example, some LLMs are decoder-only models.

These features and other features are described in more detail below.

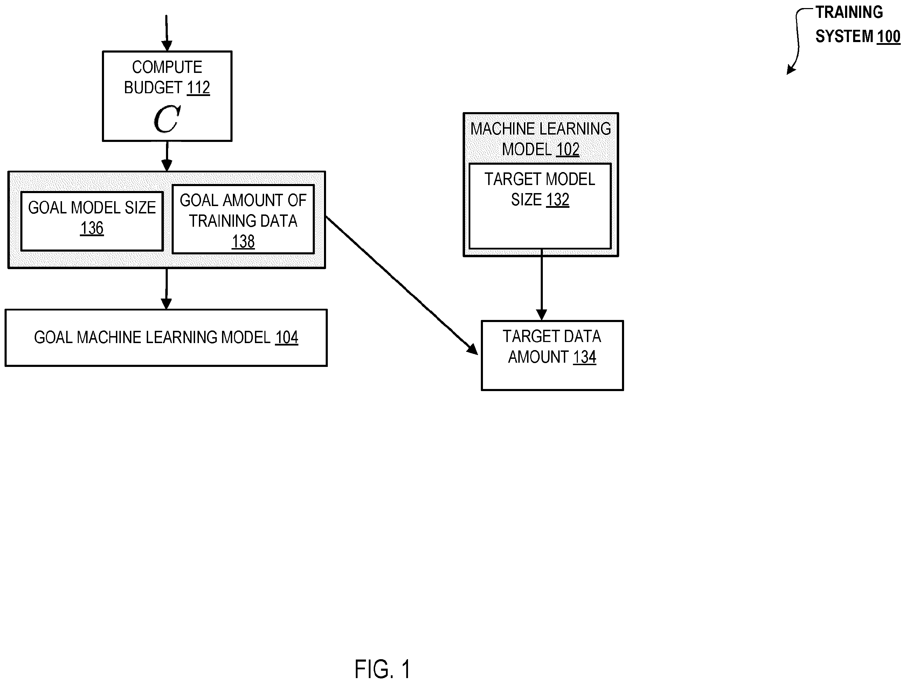

FIG. 1 shows an example training system 100 that can train a machine learning model 102 having a target model size 132 on a target amount of training data 134 to perform a machine learning task. The training system 100 is an example of a system implemented as computer programs on one or more computers in one or more locations in which the systems, components, and techniques described below are implemented.

In general, for any particular machine learning model 102 (referred to as a "smaller" machine learning model) that is configured to perform any particular machine learning task and having a target model size $N_t$ 132, the training system 100 is capable of selecting a target amount of training data $D_t$ 134 for use in training the model 102.

In particular, the system 100 selects a target amount of training data 134 that will be required to train the smaller model 102 to have the same performance on the machine learning task as a goal machine learning model 104 (also referred to as a "larger" machine learning model) that has a larger size than the model 102. That is, the size of the larger machine learning model 104 is larger than the size of the of the smaller machine learning model 102, e.g., the larger machine learning model 104 has more parameters than the smaller machine learning model 102.

For example, the larger machine learning model 104 can have a size 136 and can have been trained on an amount of training data 138. The system 100 can select a target amount of training data 134 that is larger than the amount of training data 138 on which the larger model 104 was trained. By training the smaller model 102 on more training data, the system 100 can train the smaller model 102 to match the performance of the larger model 104 even though the inference compute budget for the smaller model 102 is significantly smaller.

In some cases, the size 136 and the amount of training data 138 for the larger model 104 can have been predicted to be compute-optimal given a training compute budget C 112 for the training of the larger model 104. In other words, the model size 136 and the training data size 138 were predicted to optimize a (predicted) performance of the model 104 on the task, subject to a constraint that an amount of computing resources used for training (F) satisfies a threshold defined by the training compute budget C 112, e.g., such that $F = C,$ or such that $F \leq C.$

The training compute budget 112 defines the amount of computing resources allocated for training. For example, the allocated computing resources may be fixed due to an available computing architecture (e.g., a number of accelerators, servers, GPU clusters, supercomputers, combinations thereof, etc.) and may not (or should not) be exceeded. Alternatively or in addition, the amount of allocated resources may be fixed to limit the energy expenditures associated with training the machine learning model 104, e.g., to reduce environmental impact, to allow multiple machine learning models to be training in parallel, etc.

In particular, the model size 136 and the amount of training data 138 for the goal model 104 may have been determined using a scaling estimate, e.g., the Chinchilla scaling estimate. The scaling estimate maps the training compute budget 112 to the combination of model size and amount of training data that are estimated to be "compute-optimal," i.e., the combination that is estimated to achieve the best performance while staying within the training compute budget 112.

The Chinchilla scaling estimates and their derivation are described in more detail in Jordan Hoffmann, Sebastian Borgeaud, Arthur Mensch, Elena Buchatskaya, Trevor Cai, Eliza Rutherford, Diego de Las Casas, Lisa Anne Hendricks, Johannes Welbl, Aidan Clark, Tom Hennigan, Eric Noland, Katie Millican, George van den Driessche, Bogdan Damoc, Aurelia Guy, Simon Osindero, Karen Simonyan, Erich Elsen, Jack W. Rae, Oriol Vinyals, and Laurent Sifre. Training compute-optimal large language models, 2022

For reference, a model size $N$ can refer to a number of parameters that can be employed by the machine learning model 102, e.g., that are required to implement the machine learning model 102.

An amount of training data $D$, or a training data size, can refer to a particular size of a particular training data set 134 that can be used to train the machine learning model 102. For example, a training data size may refer to a number of tokens included in the training data set 144. More precisely, the amount of training data $D$ used for training the machine learning model 102 refers to the amount of training data seen by the machine learning model 102 during training. Hence, a training data set 144 may include multiple instances of the same tokens if the total training data available to training system 100 is limited.

As mentioned above, a training compute budget 112 can refer to a quantity of computing resources allocated for training the machine learning model 104 and can be measured in a total number of floating-point operations (FLOPs). In some cases, the training compute budget 112 may also be measured in a total number of instructions, total computation time, memory space, or combinations thereof (e.g., as a weighted sum). The quantity of computing resources used during training F (also referred to as the total compute) a given machine learning model can be measured in the same units as the compute budget 112.

To determine the target data amount 134, the training system 100 uses a model shrinking mapping that has a set of one or more model shrinking mapping parameters. In particular, the training system 100 uses the model shrinking mapping to process the goal model size 136, the goal amount of training data 138, and the target model size 132 to determine the target amount of training data 314.

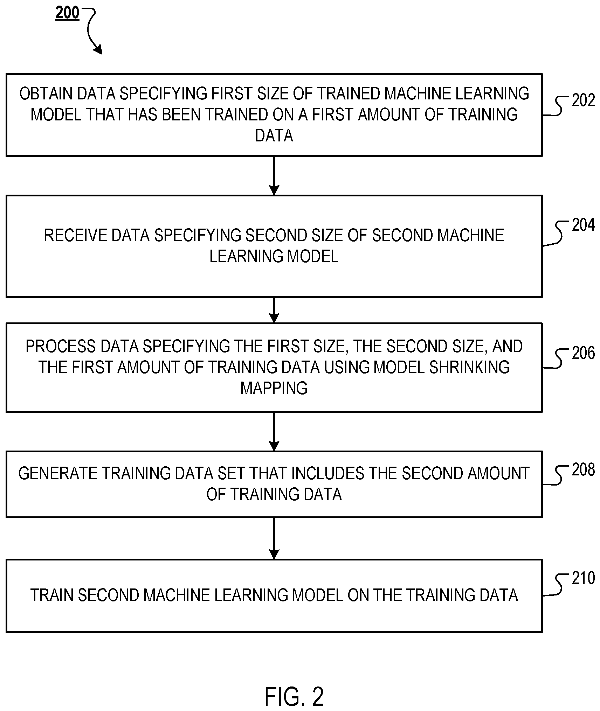

Applying the model shrinking mapping is described below with reference to FIGS. 2-4.

After determining the target data amount 134, the training system 100 can train the machine learning model 102 on a training data set having the target amount of training data 134.

For example, training system 100 can obtain the training data set by adding training examples to the first training data set used to train the machine learning model 104.

After being trained, the machine learning model 102 can be deployed for use in performing the machine learning task. For instance, the machine learning model 102 can be deployed in an environment that can enable users to provide requests for the machine learning model 102 to process specified model inputs to generate corresponding model outputs. Users can provide the requests, e.g., by way of a user interface or through an application programming interface (API). The requests can be transmitted from a user device (e.g., over a data communication network such as the internet) to one or more computers implementing the machine learning model 102, e.g., in a data center. The machine learning model 102 can process model inputs specified by user requests to generate corresponding model outputs and then transmit the model outputs to user devices (e.g., over a data communication network).

FIG. 2 is a flow diagram of an example process 200 for training a machine learning model to perform a machine learning task. For convenience, the process 200 will be described as being performed by a system of one or more computers located in one or more locations. For example, a training system, e.g., the training system 100 of FIG. 1, appropriately programmed in accordance with this specification, can perform the process 200.

The system obtains data specifying a first size of a trained first machine learning model that has been trained on a first training data set that comprises a first amount of training data to achieve a target performance on a machine learning task (step 202).

For example, the first size can be measured as the number of (trainable) parameters of the first machine learning model. As described above, the first machine learning model can be a "compute-optimal" machine learning model as determined by a scaling estimate.

The system receives data specifying a second size of a second machine learning model to be trained to perform the machine learning task (step 204). The second size is generally smaller than the first size.

The system processes the data specifying the first size of the trained first machine learning model, the second size of the second machine learning model, and the first amount of training data using a model shrinking mapping, in accordance with a set of one or more model shrinking mapping parameters, to determine a second amount of training data required to train the second machine learning model to achieve the target performance on the machine learning task (step 206).

That is, the system determines how much training data will be required to train the second machine learning model to achieve the same performance as the first machine learning model even though the second machine learning model is smaller than the first machine learning model.

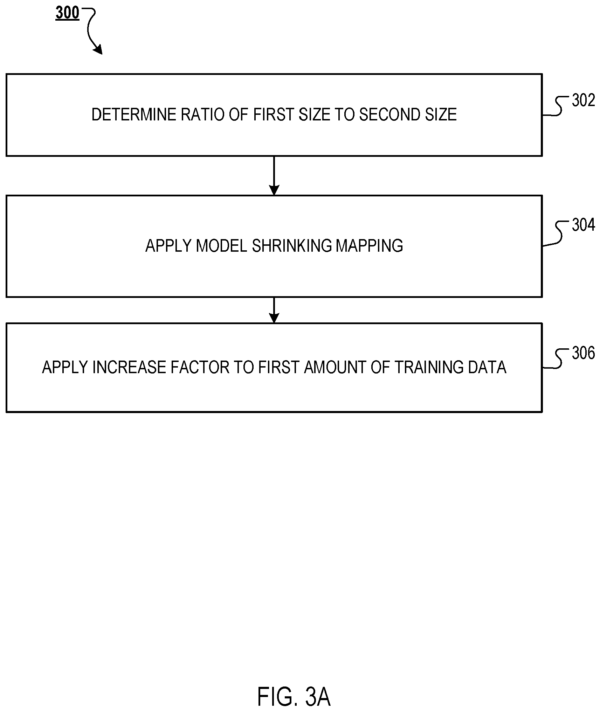

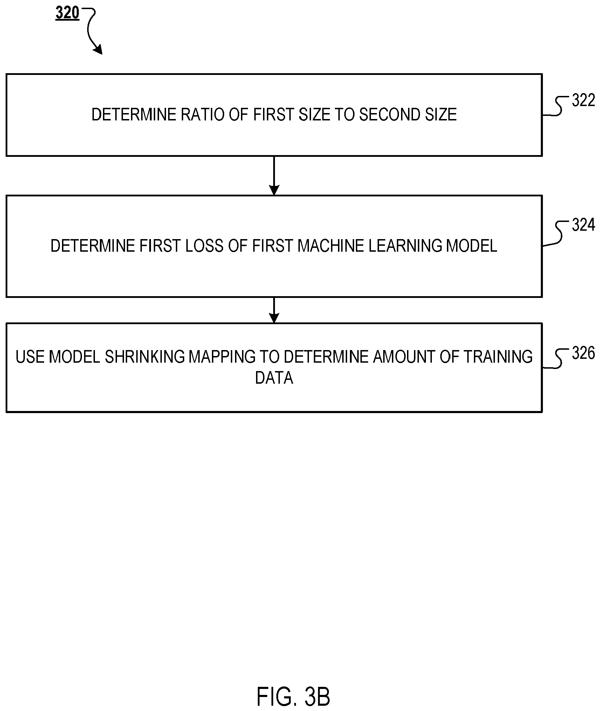

Using the model shrinking mapping to determine how much training data will be required to train the second machine learning model is described below with reference to FIG. 3A and FIG. 3B.

In some implementations, the system then provides data specifying the second amount of training data to another system. That is, the system provides another system with data specifying the second amount so that the other system can generate a training data set that includes the second amount of training data and then train the second machine learning model on the second amount of training data.

In some other implementations, the system generates a second training data set that includes the second amount of training data (step 208).

As a particular example, the system can generate the training data set by adding data to the first training data set that was used to train the first machine learning model, i.e., to a training data set that includes the first amount of training data.

In some cases, the system may not have access to enough additional training data to increase the size of the first training data set so that the first training data set has the second amount of training data.

In these cases, the system can generate additional training data in any of a variety of ways.

As one example, the system can add copies of training data items or training tokens already in the first training data set to the first training data set until the first training data set has the second amount of training data. That is, the system can "repeat" training tokens from the first training data set in order to ensure that sufficient training data is available to yield the second amount of training data.

As another example, the system can add synthetically generated training data, i.e., synthetically generated training data items, to the first training data set until the first training data set has the second amount of training data. The synthetic training data can be training data that has been generated by a trained data generation machine learning model. That is, the system can augment the first training data set with synthetically generate training data in order to ensure that sufficient training data is available to yield the second amount of training data.

For example, when the training data items are images, the trained data generation machine learning model can be an image generation neural network, e.g., a generative adversarial network (GAN) or a diffusion neural network, that has been trained on the first training data set.

As another example, when the training data items are text sequences, the trained data machine learning generation model can be a language model, e.g., the same language model as the first machine learning model or a different language model, that is controlled to generate text similar to text sequences that are already in the first training data through few-shot prompting.

The system then trains the second machine learning model on the training data set (step 210). For example, the system can train the second machine learning model to optimize the same objective function as was used to train the first machine learning model, but on the larger training data set.

Once trained, the system or another inference system can then deploy the second machine learning model. For example, the system can deploy the second machine learning model to perform the machine learning task. As another example, when the machine learning task is a pre-training task for pre-training the second machine learning model, the system can deploy the second machine learning model for performing a different, downstream machine learning task. For example, the system can use the second machine learning model to perform the downstream task in a zero-shot manner, e.g., through few shot prompting, or can first fine-tune the second machine learning model on training data for the downstream task and then deploy the fine-tuned model.

FIG. 3A is a flow diagram of an example process 300 for determining a target amount of training data required to train the second machine learning model to perform the machine learning task. For convenience, the process 300 will be described as being performed by a system of one or more computers located in one or more locations. For example, a training system, e.g., the training system 100 of FIG. 1, appropriately programmed in accordance with this specification, can perform the process 300.

The system determines a ratio of the first size of the first machine learning to the second size of the second machine learning model (step 302). That is, if the second machine learning model has size $n,$ the system determines a value of $k$ such that the first machine learning model has size $nk,$ i.e., with $k$ being equal to the first size divided by the second size $n.$

The system applies the model shrinking mapping, in accordance with the set of one or more model shrinking mapping parameters, to the ratio to determine a data increase factor (step 304). The data increase factor defines how much more training data is required for training the second machine learning model relative to the first amount that was used to train the first machine learning model in order for the second model to achieve the same performance as the first model.

Generally, the data increase factor depends only on the ratio $k$ and not on the absolute sizes of the two machine learning models, i.e., and not on $n.$ In principle, the data increase factor could be less than one (and for that reason, it may alternatively be referred to as a "data size variation factor"), but in example implementations it is typically greater than one.

As a particular example, the model shrinking mapping can be determined by first calculating an initial factor $f(k)$ in accordance with a first set of the model shrinking parameters and then adjusting the initial factor by an adjustment mapping $g(f(k))$ in accordance with a second set of model shrinking parameters to determine the final data increase factor.

As described above, a scaling estimate, e.g., the Chinchilla scaling estimate, can be used to derive an estimate of the amount of training data required to train a smaller model. More specifically, the scaling estimate, e.g., the Chinchilla scaling estimate, can be used to derive a scaling factor that is applied to, i.e., multiplied by, the amount of training data used to train a larger model to determine the amount of training data required to train a smaller model. The scaling factor derived from (and defined by) the scaling estimate can be used as the initial scaling factor.

In particular, the initial scaling factor defined by the Chinchilla scaling estimate can be computed as follows:

$$f(k) = \left(\frac{\beta}{\alpha}(1 - k^\alpha) + 1\right)^{-1/\beta},$$

where $\alpha$ and $\beta$ are the first set of shrinking mapping parameters. Intuitively, $\alpha$ represents the utility of scaling parameters (model size) while $\beta$ represents the utility of scaling data.

The system can then adjust the initial scaling factor as follows:

$$g(f(k)) = f(k)^{\frac{k}{\phi} + (1 - \frac{1}{\phi})}$$

where $\phi$ is one of the model shrinking mapping parameters, i.e., the second set of shrinking mapping parameters includes only a single parameter $\phi$.

By including the term ( $1 - \frac{1}{\phi}$ ) in the adjustment mapping g, the system ensures that the final factor is near the initial factor when $k$ is near 1, e.g., in regions where the scaling estimate is likely to be accurate.

Moreover, by adjusting the initial scaling factor using the adjustment mapping as above, the system models the fact that, as the model size of the second machine learning model moves further from the compute-optimal regime, i.e., as $k$ gets larger, the effective data efficiency of the second machine learning model decays relative to the compute-optimal first machine learning model. That is, the adjustment mapping causes the final scaling factor g to deviate further from the initial scaling factor $f$ as $k$ grows, i.e., the more the second machine learning model is shrunk relative to the first machine learning model.

As described above, the values $\alpha$, $\beta$, and $\phi$ make up the adjustment mapping parameters.

The values of these adjustment mapping parameters can be determined in any of a variety of ways. For example, the system can hold the values of $\alpha$ and $\beta$ fixed to the values that were determined as part of determining the scaling estimate, and then determine the value of $\phi$ by fitting a set of $(k, d_k, d_{nk})$ to the above equation for different values of $k$. As another example, the system can then determine the value of $\phi$ through a hyperparameter sweep technique.

As a particular example, this can result in values of $\alpha = .34$, $\beta = .28$, and $\phi = 2.5$

The system applies the data increase factor to the first amount of training data to determine the second amount of training data to be used for training the second machine learning model (step 306). For example, the system can multiply the first amount of training data by the data increase factor to determine the second amount of training data.

FIG. 3B is a flow diagram of another example process 320 for determining a target amount of training data required to train the second machine learning model to perform the machine learning task. For convenience, the process 320 will be described as being performed by a system of one or more computers located in one or more locations. For example, a training system, e.g., the training system 100 of FIG. 1, appropriately programmed in accordance with this specification, can perform the process 320.

The system determines a ratio of the first size of the first machine learning model to the second size of the second machine learning model (step 322). That is, if the second machine learning model has size $n$, the system determines a value of $k$ such that the first machine learning model has size $nk$, i.e.., with $k$ being equal to the first size divided by the second size $n$.

The system determines a first loss of the first machine learning model (step 324). For example, the system can determine the first loss of the first machine learning model by using a scaling law estimate that outputs the loss of a machine learning model given the size of the machine learning model and the amount of training data that the machine learning model is trained on.

For example, the system can use one of the Chinchilla estimates described above.

As a particular example, the system can estimate the first loss of the first machine learning model as follows:

$$\left(\frac{A}{(nk)^\alpha} + \frac{B}{d_1{}^\beta}\right) + E \qquad ,$$

where $d_1$ is the amount of training data that the machine learning model was trained on, and A, B, $\alpha$, $\beta$, and E are constant values determined as part deriving the scaling law. Generally, and as will be described in more detail below, ( $\frac{A}{(nk)^\alpha} + \frac{B}{d_1{}^\beta}$ ) is referred to as an estimate of the reducible error of the first machine learning model while E is referred to as the irreducible error of the first machine learning model.

The system uses the model shrinking mapping, in accordance with the set of one or more model shrinking mapping parameters, to determine the amount of training data needed to train the second model to have the same loss as the first loss (step 326).

As a particular example, the model shrinking mapping can be used to adjust an initial estimate of the reducible error of the second model, i.e., an estimate of the error that can be reduced by further training the second model, to generate an adjusted estimate of the reducible error. Generally, the reducible error depends on the size of the second model $n$ and the amount of training data d that the second model has been trained on. This adjusted error can then be combined with an irreducible error to generate a predicted loss of the second model.

For example, the predicted loss of the second model given $n$ and $d$ can be equal to:

$$\left(\frac{A}{n^{\alpha}} + \frac{B}{d^{\beta}}\right) * f(\phi, k) + E,$$

where ( $\frac{A}{n^{\alpha}} + \frac{B}{d^{\beta}}$ ) is the initial estimate of the reducible error, $f(\phi, k)$ is the model shrinking mapping and E is the irreducible error.

As a particular example, $f(\phi, k) = 1 + \phi * \max(k - 1, 0)$. This formulation of $f(\phi, k)$ has the effect that if $k$=1, the adjusted estimate is equal to the initial estimate and, if $k$ is greater than one, the adjusted estimate is greater than the initial estimate, i.e., ensures that a higher loss is estimated than would be estimated using the initial error estimate. This accounts for the finding that the initial estimates underestimate the amount of training data that is required to reach a given loss when the model is being "shrunk" relative to a compute-optimal model.

The system can then set the training data size $d$ to the number that results in the predicted loss for the second model, computed as above, being equal to the determined first loss for the first model.

In this example, the values A, B, $\alpha$, $\beta$, E, and $\phi$ make up the adjustment mapping parameters.

The values of these adjustment mapping parameters can be determined in any of a variety of ways. For example, the system can hold the values of $A$, $B$, $\alpha$, $\beta$, and E fixed to the values that were determined as part of determining the scaling estimate, and then determine the value of $\phi$ by fitting a set of $(k, d_k, d_{nk})$ to the above equation for different values of $k$. As another example, the system can then determine the value of $\phi$ through a hyperparameter sweep technique.

As a particular example, this can result in values of A = 406, B = 410, E = 1.69, $\alpha$ = .34, $\beta$ = .28, and $\phi$ = .03612891.

By determining the amount of training data using one of the techniques above, the system can effectively account for the fact that the previous scaling estimate underestimates the required amount of training data as $k$ grows.

For example, using the adjusted estimate, the system can estimate that one can approximate any large model with a model half the size (k =2) by training on approximately 3.5 times the data. Directly applying the previous scaling estimate would yield an estimate that only 2.42 times the data would be required, which would result in a poorly performing smaller model if used in actual training. Conversely, using an amount of training data which is greater than the adjusted estimate, may not be beneficial, e.g., if the larger model has adequate performance at the task, and may involve greater computational resources, e.g., in obtaining the extra training data.

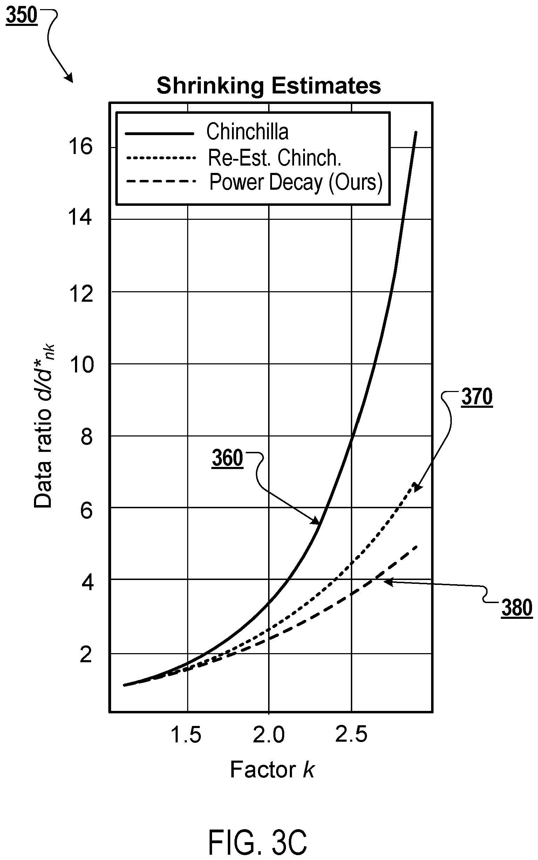

Other differences between the data increase factors generated using the various estimates are shown in FIG. 3C.

FIG. 3C shows an example graph 350 that has values of $k$ on the x-axis and values of the data increase factor (data ratio) on the y-axis. The graph 350 shows three curves: a power decay curve 360 that shows data increase factors for different values of $k$ that are determined using the described techniques and two curves 370 and 380 for two versions of data increase factors generated the Chinchilla scaling estimates. As can be seen from FIG. 3B, as $k$ increases, the curves 370 and 380 estimate significantly lower data increase factors than the curve 360. Thus, attempting to train models using estimates derived from the curves 370 or 380 would result in significantly under-performing smaller models.

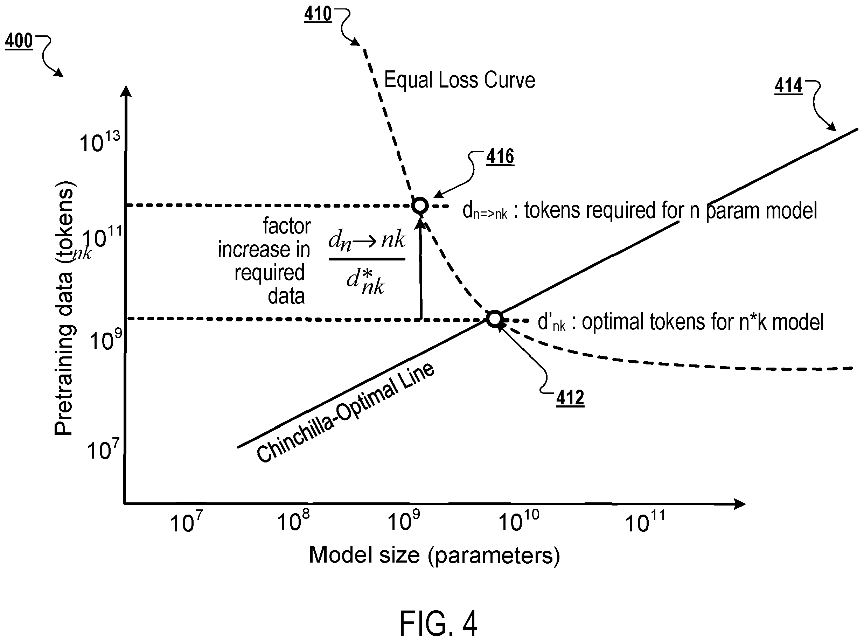

FIG. 4 shows an example graph 400 that shows an equal loss curve 410 for a particular compute-optimal larger model.

In particular, the graph 400 has training data size (in terms of number of tokens) on they axis and model size (in terms of number of parameters) on the $x$ axis.

The particular compute-optimal larger model is represented by a point 412 on a Chinchilla-Optimal line 414, i.e., by a particular combination of model size and training data size that was determined to be optimal by applying the Chinchilla scaling estimate to a particular training compute budget. In the example of FIG. 4, the particular compute-optimal larger model has size $nk$ and was trained using a training data set that has size $d_{nk}^{*}$ .

The equal loss curve 410 is generated by applying the shrinking mapping to various second model sizes, while fixing the first model size to be equal to $d_{nk}^{*}$ . Thus, each point on the equal loss curve 410 represents how many tokens are required to train a different sized model to have an equal loss, i.e., an equal performance, to the particular compute-optimal larger model on the machine learning task.

As a particular example, a point 416 on the equal loss curve 410 corresponds to a model having size $n$ that is mapped to an amount of training data that has size $d_{n \to nk}$, i.e., that, according to the shrinking mapping, needs to be trained on a training data set having size $d_{n \to nk}$ to achieve an equal loss to the particular compute-optimal machine learning model.

That is, the output of the shrinking mapping for the ratio $k$ is equal to the factor $\dfrac{d_{n \to nk}}{d^*_{nk}}$ , which can then be multiplied by

$d^*_{nk}$ to yield the size $d_{n \to nk}$.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework or a JAX framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable sub combination. Moreover, although features may be described above as acting in certain combinations and even initially be claimed as such, one or more features from a claimed combination can in some cases be excised from the combination, and the claimed combination may be directed to a sub combination or variation of a sub combination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

**Claims**

1.  A method performed by one or more computers, the method comprising:

    obtaining data specifying a first size of a trained first machine learning model that has been trained on a first training data set that comprises a first amount of training data to achieve a target performance on a machine learning task;
    receiving data specifying a second size of a second machine learning model to be trained to perform the machine learning task, wherein the second size is smaller than the first size; and
    processing the data specifying the first size of the trained first machine learning model, the second size of the second machine learning model, and the first amount of training data using a model shrinking mapping, in accordance with a set of one or more model shrinking mapping parameters, to determine a second amount of training data required to train the second machine learning model to achieve the target performance on the machine learning task, comprising:

    determining a ratio of the first size to the second size; and
    applying the model shrinking mapping, in accordance with the set of one or more model shrinking mapping parameters, to the ratio to determine the second amount of training data.

2.  The method of claim 1, further comprising:

    generating a second training data set that comprises the second amount of training data; and
    training the second machine learning model on the second training data set.

3.  The method of claim 2, wherein the second amount of training data is larger than the first amount of training data and wherein generating the training data set comprises:
    adding training data to the first training data set so that the first training data set comprises the second amount of training data.

4.  The method of claim 3 wherein adding training data to the first training data set so that the first training data set comprises the second amount of training data comprises:
    adding one or more copies of at least a subset of the training data in the first training data set.

5.  The method of claim 3 or claim 4, wherein adding training data to the first training data set so that the first training data set comprises the second amount of training data comprises:
    adding training data that has been generated by a trained data generation machine learning model.

6.  The method of any preceding claim, wherein the first and second machine learning models are respective language model neural networks and the machine learning task is a language modeling task.

7.  The method of any preceding claim, wherein the first and second machine learning models are respective neural networks, wherein the first size is a total number of parameters of the first machine learning model, and wherein the second size is a total number of parameters of the second machine learning model.

8.  The method of any preceding claim, wherein the machine learning task requires processing inputs that each include one or more tokens from a vocabulary of tokens, wherein the first size is a total number of tokens in the first training data set, and wherein the second size is a total number of tokens in the second training data set.

9.  The method of any preceding claim, wherein applying the model shrinking mapping, in accordance with the set of one or more model shrinking mapping parameters, to the ratio to determine the second amount of training data comprises:

    determining a first loss of the first machine learning model; and
    using the model shrinking mapping, in accordance with the set of one or more model shrinking mapping parameters, to determine an amount of training data needed to train the second machine learning model to have a same loss as the first loss of the first machine learning model.

10. The method of claim 9 wherein using the model shrinking mapping, in accordance with the set of one or more model shrinking mapping parameters, to determine an amount of training data needed to train the second machine learning model to have a same loss as the first loss of the first machine learning model comprises:

> using the model shrinking mapping to adjust an initial estimate of a reducible error of the second machine learning model to generate an adjusted estimate of the reducible error; and
> setting the amount of training data to an amount that results in a predicted loss for the second machine learning model being equal to the first loss, wherein the predicted loss for the second machine learning model is determined based on (i) an adjusted estimate of a reducible error of the second machine learning model that is generated by applying the model shrinking mapping to an initial estimate of the reducible error and (ii) an estimate of an irreducible error of the second machine learning model.

11. The method of any one of claims 1-8, wherein applying the model shrinking mapping, in accordance with the set of one or more model shrinking mapping parameters, to the ratio to determine the second amount of training data comprises:

> applying the model shrinking mapping, in accordance with the set of one or more model shrinking mapping parameters, to the ratio to determine a data increase factor; and
> applying the data increase factor to the first amount of training data to determine the second amount of training data.

12. The method of claim 11, wherein applying the data increase factor to the first amount of training data to determine the second amount of training data comprises:
multiplying the data increase factor by the first amount of training data to determine the second amount of training data.

13. The method of any one of claims 11 or 12, wherein applying the model shrinking mapping, in accordance with the set of one or more model shrinking mapping parameters, to the ratio to determine a data increase factor comprises:

> applying an initial mapping to the data increase factor in accordance with a first set of the model shrinking mapping parameters to generate an initial data increase factor; and
> applying an adjustment mapping to the initial data increase factor in accordance with a second set of the model shrinking mapping parameters to generate the data increase factor.

14. The method of claim 13, wherein the first size and the first amount of training data have been determined to be compute-optimal by a scaling estimate given a particular compute budget for the training of the first machine learning model, and wherein the initial mapping is defined by the scaling estimate.

15. The method of any one of claims 12-14, wherein the model shrinking mapping depends only on the ratio and not on the first amount of training data.

16. The method of any preceding claim, wherein the machine learning task comprises a language modeling task.

17. The method of any preceding claim, wherein the first and second machine learning models are each respective neural network models.

18. The method of any preceding claim when dependent on claim 2, further comprising:

> after training the second machine learning model, receiving a model input to the second machine learning model; and
> processing the model input using the second machine learning model, in accordance with trained values of a set of model parameters of the second machine learning model, to generate a model output.

19. The method of any preceding claim, wherein:

> the second machine learning model comprises a multimodal model in which one or both of a model input to the second machine learning model and a model output generated by the second machine learning model comprise an image or audio, and
> the multimodal model is configured to process the model input that comprises at least one of visual tokens representing pixels of a still or moving image, data representing an audio waveform, or textual tokens representing a sequence of text, to generate the model output that comprises at least one of textual tokens, an image, or audio representing the model input.

20. The method of any preceding claim, used for adapting the second machine learning model to specific computing hardware, wherein the second machine learning model comprises a neural network model and the specific computing hardware comprises a plurality of neural network accelerators, the method comprising:

> determining a maximum model size for the second machine learning model to be deployed on the specific computing hardware; and
> setting the second size equal to the maximum model size.

21. A method performed by one or more computers, comprising:

> receiving a model input to a second machine learning model; and
> processing the model input using the second machine learning model, in accordance with trained values of a set of model parameters of the second machine learning model, to generate a model output;
> wherein the second machine learning model has been generated by operations comprising:
> obtaining data specifying a first size of a trained first machine learning model that has been trained on a first training data set that comprises a first amount of training data to achieve a target performance on a machine learning task;
> receiving data specifying a second size of the second machine learning model to be trained to perform the machine learning task, wherein the second size is smaller than the first size; and
> processing the data specifying the first size of the trained first machine learning model, the second size of the second machine learning model, and the first amount of training data using a model shrinking mapping, in accordance with a set of one or more model shrinking mapping parameters, to determine a second amount of training data required to train the second machine learning model to achieve the target performance on the machine learning task, comprising:

>> determining a ratio of the first size to the second size; and
>> applying the model shrinking mapping, in accordance with the set of one or more model shrinking mapping parameters, to the ratio to determine the second amount of training data.

22. One or more computer-readable storage media storing instructions that when executed by one or more computers cause the one or more computers to perform operations of the respective method of any one of claims 1-21.

23. A system comprising:

> one or more computers; and
> one or more storage devices communicatively coupled to the one or more computers,

> wherein the one or more storage devices store instructions that, when executed by the one or more computers, cause the one or more computers to perform operations of the respective method of any one of claims 1-21.

COMPUTE BUDGET 112

$C$

GOAL MODEL SIZE 136

GOAL AMOUNT OF TRAINING DATA 138

GOAL MACHINE LEARNING MODEL 104

TRAINING SYSTEM 100

MACHINE LEARNING MODEL 102

TARGET MODEL SIZE 132

TARGET DATA AMOUNT 134

FIG. 1

200

OBTAIN DATA SPECIFYING FIRST SIZE OF TRAINED MACHINE LEARNING MODEL THAT HAS BEEN TRAINED ON A FIRST AMOUNT OF TRAINING DATA ⟋ 202

RECEIVE DATA SPECIFYING SECOND SIZE OF SECOND MACHINE LEARNING MODEL ⟋ 204

PROCESS DATA SPECIFYING THE FIRST SIZE, THE SECOND SIZE, AND THE FIRST AMOUNT OF TRAINING DATA USING MODEL SHRINKING MAPPING ⟋ 206

GENERATE TRAINING DATA SET THAT INCLUDES THE SECOND AMOUNT OF TRAINING DATA ⟋ 208

TRAIN SECOND MACHINE LEARNING MODEL ON THE TRAINING DATA ⟋ 210

FIG. 2

EP 4 550 211 A1

**300**

| |
|---|
| DETERMINE RATIO OF FIRST SIZE TO SECOND SIZE |

302

| |
|---|
| APPLY MODEL SHRINKING MAPPING |

304

| |
|---|
| APPLY INCREASE FACTOR TO FIRST AMOUNT OF TRAINING DATA |

306

FIG. 3A

320

DETERMINE RATIO OF FIRST SIZE TO SECOND SIZE | 322

DETERMINE FIRST LOSS OF FIRST MACHINE LEARNING MODEL | 324

USE MODEL SHRINKING MAPPING TO DETERMINE AMOUNT OF TRAINING DATA | 326

FIG. 3B

**Shrinking Estimates**

350

360

370

380

— Chinchilla
········· Re-Est. Chinch.
------ Power Decay (Ours)

Data ratio $d/d^*_{nk}$

16
14
12
10
8
6
4
2

1.5    2.0    2.5

Factor $k$

FIG. 3C

FIG. 4

EP 4 550 211 A1

**EUROPEAN SEARCH REPORT**

Application Number

EP 23 20 6829

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | Jordan Hoffmann: "Training compute-optimal large language models", arXiv (Cornell University), 29 March 2022 (2022-03-29), XP093156795, Ithaca DOI: 10.48550/arXiv.2203.15556 Retrieved from the Internet: URL:https://arxiv.org/pdf/2203.15556 [retrieved on 2024-04-29] * the whole document * | 1-23 | INV. G06N3/045 G06N3/096 |

TECHNICAL FIELDS SEARCHED (IPC)

G06N

The present search report has been drawn up for all claims

| Place of search | Date of completion of the search | Examiner |
|---|---|---|
| The Hague | 29 April 2024 | Manfrin, Max |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JORDAN HOFFMANN** ; **SEBASTIAN BORGEAUD** ; **ARTHUR MENSCH** ; **ELENA BUCHATSKAYA** ; **TREVOR CAI** ; **ELIZA RUTHERFORD** ; **DIEGO DE LAS CASAS** ; **LISA ANNE HENDRICKS** ; **JOHANNES WELBL** ; **AIDAN CLARK**. *Training compute-optimal large language models*, 2022